# EUROPÄISCHE PATENTSCHRIFT

(11) **EP 1 299 431 B1**
(45) Veröffentlichungstag und Bekanntmachung des Hinweises auf die Patenterteilung: **28.12.2005**
(21) Anmeldenummer: 01949447.5
(22) Anmeldetag: 28.06.2001
(51) Int. Cl.: C08F 10/06, C08F 2/34, B01J 19/18, B01J 8/18

(54) **VERFAHREN ZUR HERSTELLUNG VON HOMOPOLYMERISATEN ODER COPOLYMERISATEN DES PROPYLENS**
METHOD FOR PRODUCING HOMOPOLYMERS OR COPOLYMERS OF PROPENE
PROCEDE POUR PRODUIRE DES HOMOPOLYMERES OU DES COPOLYMERES DU PROPYLENE

(30) Priorität: 03.07.2000 DE 10031392
(43) Veröffentlichungstag der Anmeldung: 09.04.2003
(73) Patentinhaber: Basell Polyolefine GmbH, 50389 Wesseling (DE)
(72) Erfinder: VIERTEL, Günter, 53332 Bornheim (DE); HAMANN, Axel, 50169 Kerpen-Horrem (DE)
(86) Internationale Anmeldenummer: PCT/EP2001/007411
(87) Internationale Veröffentlichungsnummer: WO 2002/002656

(56) Entgegenhaltungen:
- EP-A- 0 038 478
- EP-A- 0 360 094
- EP-A- 0 749 992
- EP-A- 0 849 285
- EP-A- 0 906 782
- DE-C- 19 645 947

## Beschreibung

Die Erfindung betrifft ein Verfahren zur Herstellung von Homopolymerisaten oder Copolymerisaten des Propylens nach dem Oberbegriff des Patentanspruches 1.

Ein derartiges Verfahren ist aus der DE 196 45 947 C1 bekannt.

Bei diesem bekannten Verfahren, das wiederum auf ein Verfahren gemäß EP 38 478 B1 zurückgeht, werden Homo- oder Copolymerisate des Propylens in der Gasphase dadurch hergestellt, daß gasförmige oder flüssige Monomere in eine Polymerisationszone eingebracht und polymerisiert werden, wobei der Druck und die Temperatur in der Polymerisationszone in einem Bereich gehalten werden, der dem gasförmigen Zustand der Monomere entspricht. Es wird gasförmiges, nicht durch Polymerisation verbrauchtes Monomere aus der Polymerisationszone ausgetragen, verflüssigt und flüssig in die Polymerisationszone wieder eingebracht. Die Temperaturregelung erfolgt mittels fortlaufender Messung der Temperatur und einer bei Temperaturänderung ausgelösten Änderung der pro Zeiteinheit in die Polymerisationszone eingebrachten Menge an flüssigen Monomeren.

Der Erfindung lag die Aufgabe zugrunde, das bekannte Verfahren so auszugestalten, daß es mit noch besserem Erfolg durchgeführt werden kann, wobei insbesondere die zeitliche Konstanz der Eigenschaften des Polymerisats verbessert und die Reaktorausstöße weiter erhöht werden sollen.

Zur Lösung dieser Aufgabe wird vorgeschlagen, die Temperatur in der Polymerisationszone an mehreren, vertikal gegeneinander versetzten Stellen zu messen und aus den Meßwerten jeweils einen Mittelwert zu bilden und die Mittelwerte mit rechnerischen Sollwert-Vorgaben zu vergleichen und aufgrund von Größe und Vorzeichen der festgestellten Differenz die in die Polymerisationszone zu fördernde Menge an Monomeren zu verändern.

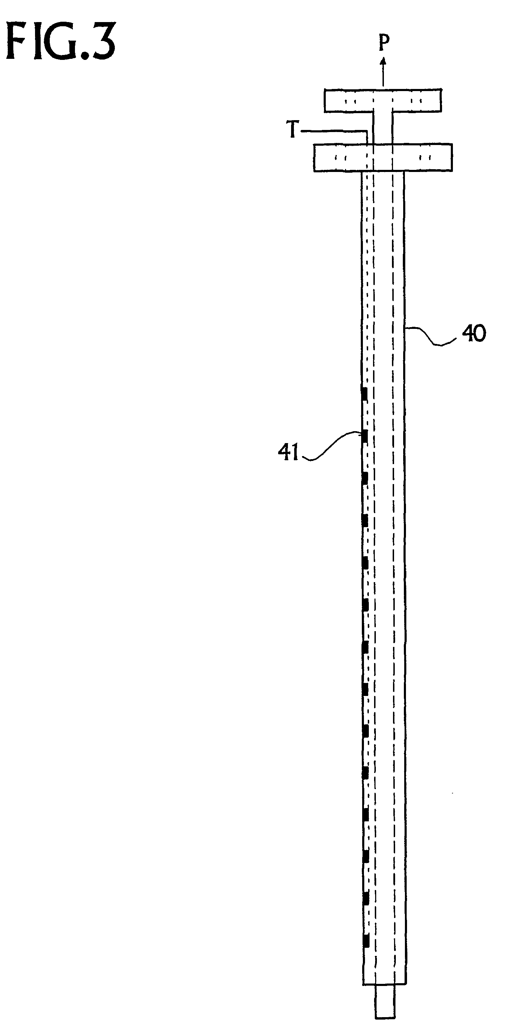

Hierdurch läßt sich eine weitgehend einheitliche Reaktionstemperatur im gerührten Pulverbett der Polymerisationszone erreichen. Besonders vorteilhaft ist es, wenn zur Temperaturmessung ein Polymeraustragsrohr, wie es in Figur 3 schematisch dargestellt ist, verwendet wird. Das Polymeraustragsrohr besitzt mehrere vertikal hintereinander angeordnete Temperaturfühler und ist an einer Stelle in das Pulverbett eingetaucht, wo die Bewegung des feinteiligen, gerührten Polymerisates besonders intensiv ist.

Ausserdem wird erfindungs gemäß der Druck in der Polymerisationszone mit Hilfe eines Ausgleichsbehälters für die im Kreislauf geführten, kondensierten Monomere konstant gehalten. Auf diese Weise kann der Füllstand des Kreispropylenkondensators in Abhängigkeit vom Reaktordruck reguliert werden, was mit regeltechnischen Einrichtungen allein nicht gewährleistet ist.

In einer bevorzugten Ausgestaltung des erfindungsgemäßen Verfahrens werden dem aus der Polymerisationszone ausgetragenen Polymerisat in einer zweiten Polymerisationszone Propylen und/oder Gemische aus C₂- bis C₈-Kohlenwasserstoffen bei Drücken von 10 bis 30 bar und Temperaturen von 30 bis 90°C hinzupolymerisiert, um die physikalischen Eigenschaften der Polymere zu verändern bzw. zu verbesseren.

Die Erfindung wird nachfolgend unter Hinweis auf die Zeichnungen näher erläutert.

In einem Rührreaktor (1), der in einer Polymerisationszone (2) einen von unten antreibbaren Wendelrührer enthält, wird Propylen-Homo- oder- Copolymerisat in der Gasphase in einem Rührbett, bestehend aus festen Polymerteilchen einer Teilchengröße von 0,05 bis 10 mm, mittels eines ziegler-Natta-Katalysatorsystems polymerisiert. Die Katalysatorkomponenten werden bei (3) und (4) getrennt in die Polymerisationszone dosiert. Die Regelung des Molekulargewichts der Polymeren erfolgt mit Wasserstoff, der bei (15) in den Reaktor dosiert wird. Im allgemeinen beträgt der Reaktordruck 10 bis 50 bar, vorzugsweise 25 bis 35 bar, und die Polymerisationstemperatur 40 bis 150°C, vorzugsweise 60 bis 90°C. Die Polymerisationswärme wird durch Verdampfungskühlung mit Hilfe von überschüssigen Monomeren abgeführt, indem pro t polymerisiertes Propylen etwa 6-7 t Monomere über mehrere Teilströme in das Rührbett eingebracht und mit dem Polypropylen-Pulver intensiv vermischt werden.

Die Polymerisationstemperatur von 40 - 150°C wird mit Hilfe des verfahrensnotwendigen Polymeraustragsrohres (40) kombiniert mit 14 Temperaturfühlern (41) in einer Position im Rührbett gemessen, wo eine besonders intensive Bewegung des feinteiligen Polymerisates stattfindet.

Mit Hilfe eines Rechners wird je nach Reaktoranstoß und dem zu produzierenden Polymertyp eine beliebige Anzahl Temperaturmessungen gemittelt und diese mittlere Temperatur zur Regelung eines Teilstromes flüssiger Monomere, die durch Verdampfen zur Abfuhr der Polymerisationswärme dienen, eingesetzt.

Die nicht durch Polymerisation verbrauchten, mit staubförmigen Polymerteilchen beladenen Monomere strömen mit einer Geschwindigkeit von bis zu 0,5 m/sec über eine Öffnung am Reaktorkopf in einen Reaktordom (5), werden hier durch flüssiges Kreispropylen einschließlich gelöster Comonomere und Frischpropylen, welche bei (6) zudosiert werden, auf Kondensationstemperatur gebracht und dadurch von einem Teil des mitgeführten staubförmigen Polymeren befreit. Zur vollständigen Staubabscheidung werden die dampfförmigen Monomere über einen Zyklon (7) einem Filter (8) zugeführt und anschließend im Kreisgaskondensator (9) an senkrechten Rohren kondensiert, wobei sich der zur Regelung des Molekulargewichtes eingesetzte Wasserstoff zum größten Teil im kondensierten Propylen löst. Der nicht gelöste Anteil Wasserstoff wird mit Hilfe des Ejektors (10) in den Reaktor (1) zurückgeführt.

Die Regelung des Reaktordruckes von 20 - 40 bar erfolgt mit Hilfe eines Behälters und eines Regenventils. Steigt zum Beispiel der Druck im Reaktor durch gestiegene Polymerisationsgeschwindigkeit an, wird eine größere Wärmeaustauschfläche im Kreiskondensator (9) benötigt. Das Regenventil 12 gibt dann eine etwas größere Menge flüssiger Monomere aus dem Kondensator frei, als zur Abfuhr der Polymerisationswärme benötigt wird. Dadurch steigt der Stand von flüssigen Monomeren im Behälter (11) an und im Kreisgaskondensator (9) fällt der Stand und gibt eine größere Fläche zur Kondensation frei. Die Regelung des Reaktordruckes kann in engeren Grenzen gehalten werden als bisher.

Mit Hilfe der Pumpe (13) wird die zur Abfuhr der Polymerisationswärme dienenden Monomere dem Reaktor wieder zugeführt. Ein Teil davon wird über eine zweite Pumpe (14) auf ein höheres Druckniveau gebracht und als Treibstrom zur Wasserstoffabsaugung aus dem Kreisgaskondensator (9) mit Hilfe des Ejektors (10) benötigt.

Die Comonomeren werden dem Reaktor (1) über geregelte Mengenströme (16) zugeführt. Der Frischpropylenstrom (17) wird durch die Standmessung des Behälters (11) geregelt. Das im Rührbett (2) des Reaktors (1) gebildete feinteilige trockene Polymerisat wird nach einer Verweilzeit von 50 - 70 Minuten durch das ins Rührbett eintauchende Austragsrohr (40), das gleichzeitig zur Messung der Reaktionstemperatur dient, durch periodisches Öffnen des Hahnes (18) in den Behälter (19) zusammen mit 10 - 25 % unumgesetzter Monomere gefördert. Die periodische Öffnung des Hahnes (18) wird von einer radiometischen Pulverstandmessung am Reaktor (1) gesteuert.

Im Behälter (19) wird das Polymerisat von entspannten Monomeren getrennt, die Monomeren zur Aufarbeitung weitergeleitet und das Polymerisat mit der Zellenradschleuse (20) in den Behälter (21) gefördert und in diesem Behälter (21) mit Stickstoff im Gegenstrom bei einer Verweilzeit von 60 Minuten vom restlichen Monomeren befreit, bevor es über die Zellenradschleuse (22) zur Extrusion gefördert wird.

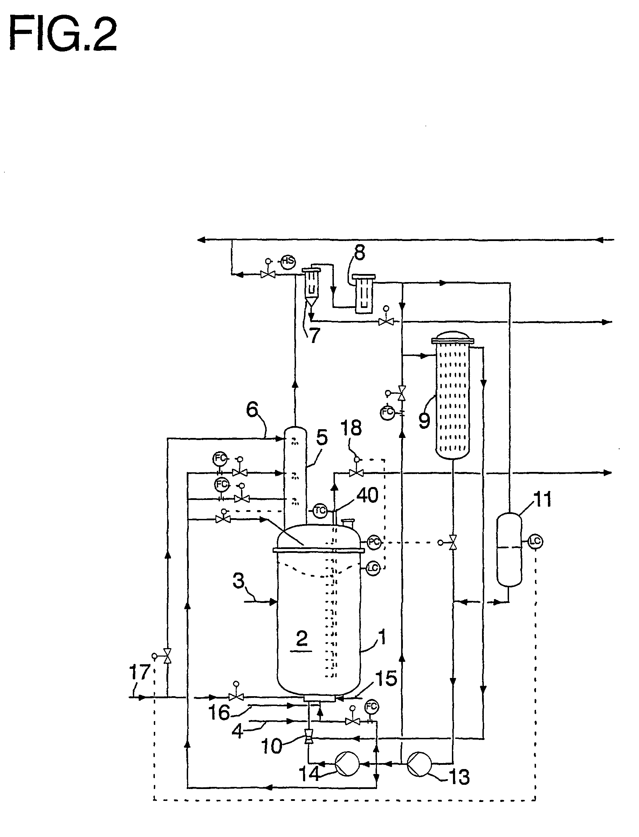

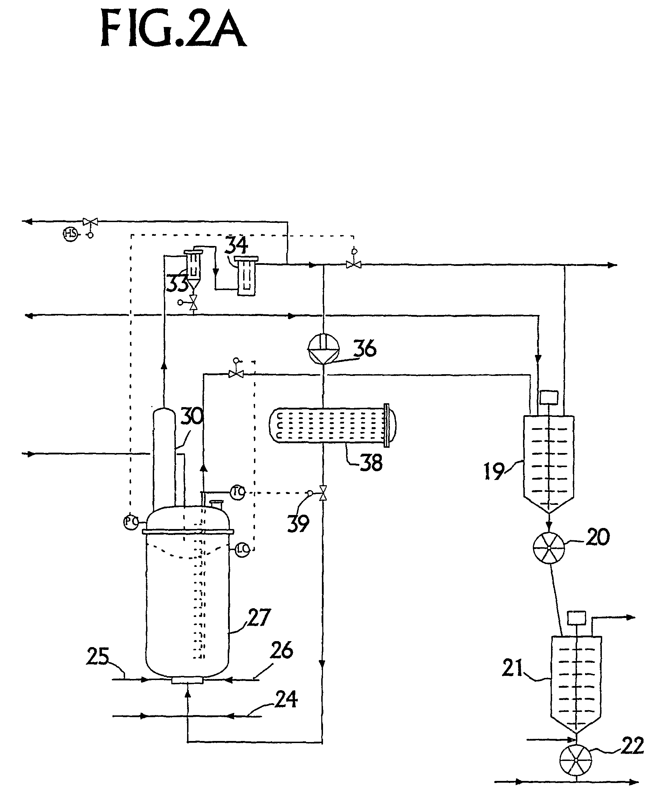

Figuren 2 und 2A zeigen eine Reaktorkaskade, bestehend aus zwei hintereinander geschalteten Reaktoren mit einem Rührbettvolumen von je 75 m³.

Dabei wird das im ersten Reaktor polymerisierte Propylenhomo- oder- copolymerisat quasikontinuierlich durch periodisches Öffnen des Hahnes (18) zusammen mit Propylen oder Propylen-Comonomeren-Gemischen in den Reaktor (27) übertragen. Die Menge der übertragenen Monomeren beträgt 10 - 25 Gew.-% bezogen auf das übertragene Polymerisat. Im Reaktor (27) wird bei der Herstellung von Propylenhomopolymerisat nicht nur das aus dem ersten Reaktor übertragene Propylen polymerisiert, sondern weitere Mengen Propylen (25) in den Reaktor gefördert.

Bei der Herstellung von Copolymerisaten können zusätzliche Propylenmengen sowie C₂- oder C₄-C₈-Kohlenwasserstoffe eingesetzt werden. Die Molmassenregelung im Reaktor (27) erfolgt ebenfalls wie im ersten Reaktor (1) mit Wasserstoff (26).

Der mit den Polymeren übertragene Katalysator besitzt eine so große Aktivität, daß sich eine weitere Zugabe von Katalysatoren bei der Herstellung nahezu aller Polymertypen erübrigt. Es ist vielmehr bei der Eindosierung von Comonomeren, z.B. Ethen, notwendig, die Aktivität des Katalysators durch Zugabe von Isopropanol (24) zu regeln. Die nicht umgesetzten Monomere, die zur Abfuhr der Polymerisationswärme dienen, strömen in den Reaktordom (30) und werden anschließend im Zyklon (33) und Filter (34) vom mitgeführten feinteiligen Polymerisat befreit, im Verdichter (36) komprimiert, im Kreisgaskühler (38) mit Kühlwasser oder einem Kältemittel gekühlt oder teilweise verflüssigt und zum überwiegenden Teil zur Abfuhr der Polymerisationswärme über das Regelventil (39) zweiphasig in den Reaktor zurückgefahren.

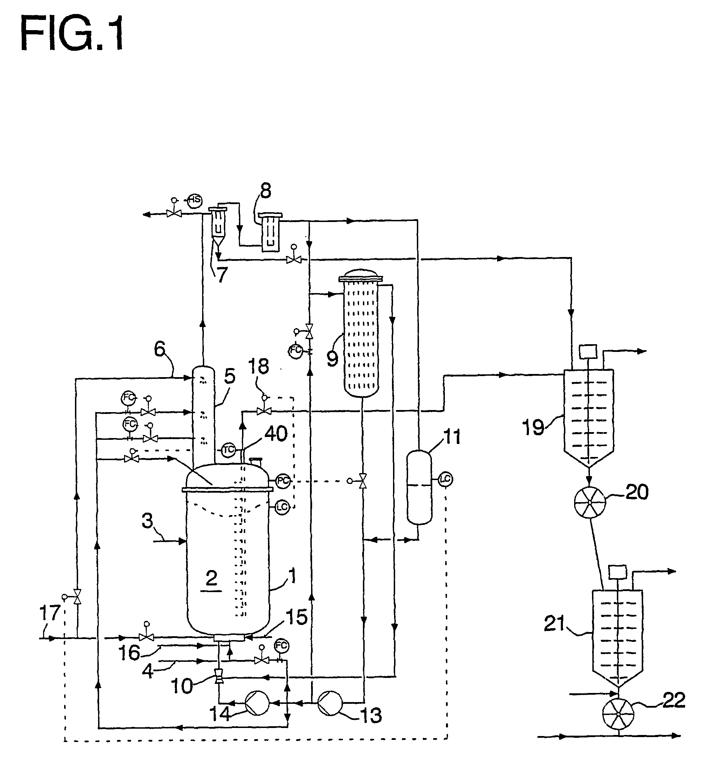

Die Messung und Regelung der Polymerisationstemperatur und der Austrag der Polymere erfolgt ebenfalls mittels des Temperaturfühler (41) enthaltenden Austragsrohres (40). Auch die Abtrennung der Monomere vom Polymerisat im Rührbehälter (19), die Entgasung der Polymere und ihre Überführung in die Extrusion entsprechen dem Verfahrensablauf gemäß Figur 1.

Mit dem Verfahren nach der Erfindung lassen sich der Reaktorausstoß und die zeitliche Konstanz der Polymereigenschaften wesentlich verbessern. So konnte beispielsweise der Ausstoß einer Reaktorkaskade aus zwei 25 m³-Reaktor von 4 t/h auf >12t/h gesteigert werden.

## Patentansprüche

1. Verfahren zur Herstellung von Homopolymerisaten oder Copolymerisaten des Propylens durch Polymerisation entsprechender Monomere mittels eines Katalysators bei Temperaturen von 40 bis 150°C und Drücken von 10 bis 50 bar in der Gasphase, bei dem man die gasförmigen oder flüssigen Monomere in eine Polymerisationszone einbringt und das Polymerisat aus der Polymerisationszone austrägt und wobei man in der Polymerisationszone den Druck und die Temperatur in einem Bereich hält, der dem gasförmigen Zustand der Monomere entspricht, gasförmige, nicht durch Polymerisation verbrauchte Monomere aus der Polymerisationszone austrägt, in einem Kondensator verflüssigt, speichert und flüssig in die Polymerisationszone wieder einbringt, die Temperatur in der Polymerisationszone regelt mittels fortlaufender Messung der Temperatur und einer **dadurch** bei Temperaturänderung ausgelösten Änderung der pro Zeiteinheit eingebrachten Menge an flüssigen, in der Polymerisationszone verdampfenden Monomeren, und die durch Polymerisation verbrauchten Monomere durch Zufuhr von Frisch-Monomer ersetzt, **dadurch gekennzeichnet, daß** die Temperatur in der Polymerisationszone an mehreren, vertikal gegeneinander versetzten Stellen gemessen und aus den Meßwerten jeweils ein Mittelwert gebildet wird und daß die Mittelwerte mit rechnerischen Sollwert-Vorgaben verglichen und aufgrund von Größe und Vorzeichen der festgestellten Differenz die in die Polymerisationszone zu fördernden Mengen an Monomeren verändert werden, wobei der Druck in der Polymerisationszone mit Hilfe eines Ausgleichsbehälters für die im Kreislauf geführten, kondensierten Monomere, mit dem der Füllstand des Kreispropylenkondensators in Abhängigkeit vom Reaktionsdruck regulierbar ist, konstant gehalten wird.

2. Verfahren nach Anspruch 1, **dadurch gekennzeichnet, daß** dem aus der Polymerisationszone ausgetragenen Polymerisat in einer zweiten Polymerisationszone Propylen und/oder Gemische aus C₂- bis C₈-Kohlenwasserstoffen bei Drücken von 10 bis 30 bar und Temperaturen von 30 bis 90°C hinzupolymerisiert werden.

## Claims

1. A process for preparing homopolymers or copolymers of propylene by polymerization of corresponding monomers by means of a catalyst at temperatures of from 40 to 150°C and pressures of from 10 to 50 bar in the gas phase, in which the gaseous or liquid monomers are introduced into a polymerization zone and the polymer is discharged from the polymerization zone and in which the pressure and the temperature in the polymerization zone are kept in a range corresponding to the gaseous state of the monomers, gaseous monomers which have not been consumed by polymerization are discharged from the polymerization zone, liquefied in a condenser, stored and reintroduced in liquid form into the polymerization zone, the temperature in the polymerization zone is regulated by means of continual measurement of the temperature and a change in the amount of liquid monomers which vaporize in the polymerization zone introduced per unit time triggered as a result of a temperature change, and the monomers consumed by polymerization are replaced by introduction of fresh monomer, wherein the temperature in the polymerization zone is measured at a plurality of vertically spaced points and a mean is in each case formed from the measured values and the means are compared with calculated intended values and the amounts of monomers to be fed into the polymerization zone are altered on the basis of the size and sign of the difference found, with the pressure in the polymerization zone being kept constant with the aid of a compensation vessel for the circulating, condensed monomers by means of which the fill level of the circulating propylene condenser can be regulated as a function of the reaction pressure.

2. The process according to claim 1, wherein propylene and/or mixtures of C₂-C₈-hydrocarbons are polymerized at pressures of from 10 to 30 bar and temperatures of from 30 to 90°C onto the polymer discharged from the polymerization zone in a second polymerization zone.

## Revendications

1. Procédé de production d'homopolymères ou de copolymères du propylène par polymérisation de monomères correspondants au moyen d'un catalyseur à des températures de 40 à 150° C et une pression de 10 à 50 bars en phase gazeuse, dans lequel on introduit les monomères sous forme de gaz ou liquide dans une zone de polymérisation et le polymère est extrait de la zone de polymérisation, et dans lequel on maintient dans la zone de polymérisation, la pression et la température dans une plage correspondant à l'état gazeux des monomères, on extrait de la zone de polymérisation les monomères gazeux non utilisés par la polymérisation, on les liquéfie dans un condensateur, on les conserve et on les introduit à nouveau sous forme liquide dans la zone de polymérisation, on règle la température dans la zone de polymérisation au moyen d'une mesure en continu de la température et par une modification, déclenchée ainsi du fait de la modification de la température, de la quantité apportée par unité de temps en monomères liquides, se vaporisant dans la zone de polymérisation et l'on remplace les monomères utilisés par la polymérisation par l'apport de monomères frais, **caractérisé en ce que** la température dans la zone de polymérisation est mesurée à plusieurs endroits décalés verticalement les uns par rapport aux autres, et qu'à partir des valeurs mesurées, on forme respectivement une valeur moyenne, et **en ce que** les valeurs moyennes sont comparées à des données de valeurs théoriques calculées et sur la base de la taille et des signes de la différence constatée, les quantités de monomères à apporter dans la zone de polymérisation sont changées, la pression dans la zone de polymérisation étant maintenue constante à l'aide d'un réservoir de compensation pour les monomères condensés conduits en cycle, avec lequel le remplissage du condensateur cyclique de propylène peut être réglé en fonction de la pression réactionnelle.

2. Procédé selon la revendication 1, **caractérisé en ce que** l'on ajoute au polymère retiré de la zone de polymérisation, du propylène et/ou des mélanges d'hydrocarbures en C₂ à C₈ dans une deuxième zone de polymérisation à une pression de 10 à 30 bars et à des températures de 30 à 90° C.
